(19) **Europäisches Patentamt / European Patent Office / Office européen des brevets**

(11) **EP 4 604 206 A1**

(12) **EUROPEAN PATENT APPLICATION**
published in accordance with Art. 153(4) EPC

(43) Date of publication:
**20.08.2025 Bulletin 2025/34**

(21) Application number: **24869808.6**

(22) Date of filing: **31.05.2024**

(51) International Patent Classification (IPC):
**H01M 4/36** (2006.01)    **H01M 10/00** (2006.01)

(52) Cooperative Patent Classification (CPC):
**C01B 33/32; H01M 4/0471; H01M 4/1391;**
**H01M 4/36; H01M 4/366; H01M 4/386; H01M 4/48;**
**H01M 4/483; H01M 4/485; H01M 4/58;**
**H01M 4/5825; H01M 4/583; H01M 4/587;**
**H01M 4/62; H01M 4/625;**         (Cont.)

(86) International application number:
**PCT/CN2024/096685**

(87) International publication number:
**WO 2025/066246 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.09.2023  CN 202311294348**

(71) Applicants:
• **BTR New Material Group Co., Ltd.**
  **Shenzhen, Guangdong 518106 (CN)**
• **Dingyuan New Energy Technology Co., Ltd.**
  **Huizhou, Guangdong 516227 (CN)**

(72) Inventors:
• **DENG, Zhiqiang**
  **Shenzhen, Guangdong 518106 (CN)**
• **PANG, Chunlei**
  **Shenzhen, Guangdong 518106 (CN)**
• **XIE, Wei**
  **Shenzhen, Guangdong 518106 (CN)**
• **LI, Fangru**
  **Shenzhen, Guangdong 518106 (CN)**
• **REN, Jianguo**
  **Shenzhen, Guangdong 518106 (CN)**
• **HE, Xueqin**
  **Shenzhen, Guangdong 518106 (CN)**

(74) Representative: **Studio Torta S.p.A.**
**Via Viotti, 9**
**10121 Torino (IT)**

(54) **NEGATIVE ELECTRODE MATERIAL AND PREPARATION METHOD THEREFOR, AND BATTERY**

(57)    Relating to the field of anode materials, and an anode material, a preparation method thereof, and a battery provided. The anode material includes a silicon-based active material and a lithium silicate, and the anode material further includes Mg element, Al element, and P element, where the Mg element accounts a mass content of a% in the anode material, the Al element accounts a mass content of b% in the anode material, the P element accounts a mass content of c% in the anode material, and in the anode material, a, b and c satisfy the following relational expressions: $0.3 \leq (a+b)/c \leq 1.5$, and $0.5 \leq a+b+c \leq 10$. By introducing Mg, Al, and P elements, the anode material facilitates to form a lithium ion transport channel, improving rate of the anode material.

impregnating a silicon-based raw material into a phosphoric acid solution for surface modification, and performing solid-liquid separation to obtain a precursor —— S10

heating a mixture including the precursor, a lithium source, a magnesium source, and an aluminum source to obtain the anode material, where the anode material includes a silicon-based active material and a lithium silicate, and the anode material further includes Mg element, Al element, and P element, where the Mg element accounts a mass content of a% in the anode material, the Al element accounts a mass content of b% in the anode material, the P element accounts a mass content of c% in the anode material, and in the anode material, a, b and c satisfy the following relational expressions: $0.3 \leq (a+b)/c \leq 1.5$, and $0.5 \leq a+b+c \leq 10$ —— S20

FIG. 1

(52) Cooperative Patent Classification (CPC): (Cont.)
**H01M 10/00; H01M 10/052; H01M 10/0525;**
C01P 2004/51; C01P 2004/80; C01P 2006/40;
H01M 2004/027; Y02E 60/10

**Description**

This application claims the benefit of priority to Chinese Patent Application No. 202311294348.1 entitled "ANODE MATERIAL, PREPARATION METHOD, AND BATTERY" filed on September 28, 2023, the entire content of which is incorporated herein by reference.

**TECHNICAL FIELD**

The present application relates to a field of anode material, particular to an anode material, a preparation method thereof, and a battery.

**BACKGROUND**

With continuous expansion and deepening of the application of lithium ion battery, there are more and more requirements for performance of the lithium ion battery, especially in the aspect of energy density of battery. Traditional graphite anode material is not enough to meet increasing market demands. As an anode material with a high specific capacity, silicon oxide material has attracted much attention in recently. A specific capacity of the silicon oxide material exceeds 2000 mAh/g. However, compared with graphite material, the silicon oxide material has low initial Coulombic efficiency, poor conductivity, and poor cycle and rate performance.

In order to improve the performances of the silicon-oxygen material, lithium doping is often adopted for improving initial Coulombic efficiency of the silicon-oxygen material. But, after lithium doping, silicon distribution in original silicon-oxygen material is changed, which causes silicon aggregation, and silicon crystal has a grain size increased by more than 50%, resulting in degraded rate performance and reduced cycle performance of the material. In addition, the lithium doped silicon oxide material contains lithium silicate therein. The lithium silicate bring a high alkalinity due to hydrolysis, which damage polymer binder as preparing an aqueous slurry, thus stability of the slurry is poor, resulting in settlement of the slurry, which tends to affect manufacturing of battery.

**SUMMARY**

Embodiments of the present disclosure provide an anode material, a preparation method thereof, and a battery. By introducing Mg, Al, and P elements into the anode material, it facilitates to form a lithium ion transport channel, improving rate and cycle performance of the anode material.

In a first aspect, embodiments of the present disclosure provide an anode material, including a silicon-based active material and a lithium silicate.

The anode material further includes Mg element, Al element, and P element, where the Mg element accounts a mass content of a% in the anode material, the Al element accounts a mass content of b% in the anode material, the P element accounts a mass content of c% in the anode material, and in the anode material, a, b and c satisfy the following relational expressions: $0.3 \leq (a+b)/c \leq 1.5$, and $0.5 \leq a+b+c \leq 10$.

In some embodiments, the silicon-based active material includes a silicon grain with a grain size of $\leq 20$ nm.

In some embodiments, the silicon-based active material includes silicon and/or silicon oxide.

In some embodiments, the silicon-based active material includes silicon oxide with a general formula of $SiO_x$, where $0 < x \leq 2$.

In some embodiments, the lithium silicate includes at least one of $Li_2SiO_3$, $Li_2Si_2O_5$, and $Li_4SiO_4$.

In some embodiments, in the anode material, $0.002 \leq a/b \leq 2$.

In some embodiments, the Mg element accounts a mass content of a% in the anode material, where $0.001 \leq a \leq 0.065$.

In some embodiments, the Al element accounts a mass content of b% in the anode material, where $0.09 \leq b \leq 0.55$.

In some embodiments, the P element accounts a mass content of c% in the anode material, where $0.15 \leq c \leq 0.65$.

In some embodiments, the anode material further includes a carbon layer.

In some embodiments, the carbon layer includes at least one of an amorphous carbon material and a graphitized carbon material.

In some embodiments, the carbon layer includes an amorphous carbon material, where the amorphous carbon material includes at least one of amorphous carbon, carbon black, and activated carbon.

In some embodiments, the carbon layer includes a graphitized carbon material, where the graphitized carbon material includes at least one of conductive graphite and graphene.

In some embodiments, the anode material has a particle size distribution satisfying:

$D10 \geq 1.0\ \mu m$, $3\ \mu m \leq D50 \leq 10\ \mu m$, and $D90 \leq 25.0\ \mu m$.

In some embodiments, the lithium silicate accounts a mass content of 30% to 80% in the anode material.

In some embodiments, the carbon layer has a thickness of 10 nm to 2000 nm.

In some embodiments, carbon element accounts a mass ratio of 1% to 50% in the anode material.

In some embodiments, the anode material has a specific surface area of $0.1\ m^2/g$ to $50\ m^2/g$.

In some embodiments, the anode material has a tap density of $0.5\ g/cm^3$ to $1.5\ g/cm^3$.

In some embodiments, the anode material is tested for specific capacity at a voltage of 0 to 1.5V, the specific capacity of the anode material is A at a cut-off voltage of 0.3V, the specific capacity of the anode material is B at a cut-off voltage of 0.4V, and the specific capacity of the anode material is C at a cut-off voltage of 0.5V, which satisfy the following relational expression:

$$0.7 \leq (C-B)/(B-A) \leq 1.3.$$

In some embodiments, the anode material has a pH value of 9 to 12.

In a second aspect, embodiments of the present disclosure provide a preparation method of an anode material, including the following steps:

impregnating a silicon-based raw material into a phosphoric acid solution for surface modification, and performing solid-liquid separation to obtain a precursor; and

heating a mixture including the precursor, a lithium source, a magnesium source, and an aluminum source to obtain the anode material, where the anode material includes a silicon-based active material and a lithium silicate, and the anode material further includes Mg element, Al element, and P element, where the Mg element accounts a mass content of a% in the anode material, the Al element accounts a mass content of b% in the anode material, the P element accounts a mass content of c% in the anode material, and in the anode material, a, b and c satisfy the following relational expressions: $0.3 \leq (a+b)/c \leq 1.5$, and $0.5 \leq a+b+c \leq 10$.

In some embodiments, the silicon-based active material includes a silicon grain with a grain size of $\leq 20$ nm.

In some embodiments, the silicon-based active material includes silicon and/or silicon oxide.

In some embodiments, the silicon-based active material includes silicon oxide SiOx, where $0 < x \leq 2$.

In some embodiments, the lithium silicate includes at least one of $Li_2SiO_3$, $Li_2Si_2O_5$, and $Li_4SiO_4$.

In some embodiments, in the anode material, $0.002 \leq a/b \leq 2$.

In some embodiments, the phosphoric acid solution has a concentration of 0.05 mol/L to 5 mol/L.

In some embodiments, the impregnating has a duration of 2 h to 10 h.

In some embodiments, the solid-liquid separation includes at least one of filtration and centrifugation.

In some embodiments, the lithium source includes at least one of $Li_2O$, $Li_2CO_3$, LiOH, Li, LiH, $LiAlH_4$, and $LiBH_4$.

In some embodiments, the magnesium source includes at least one of $Mg_2O$, Mg, $Mg(OH)_2$, and $MgCl_2$.

In some embodiments, the aluminum source includes at least one of $Al_2Os$, Al, $Al(OH)_3$, and $AlCl_3$.

In some embodiments, the heating has a temperature of 400°C to 900°C.

In some embodiments, the heating has a temperature keeping time of 2 h to 12 h.

In some embodiments, the heating is performed in a protective atmosphere.

In some embodiments, a gas of the protective atmosphere includes at least one of nitrogen, helium, neon, argon, and krypton.

In some embodiments, before impregnating a silicon-based raw material into a phosphoric acid solution for surface modification, the method further includes: carbon-coating a silicon-based raw material to obtain a silicon-carbon composite as the silicon-based raw material.

In some embodiments, after heating a mixture including the precursor, a lithium source, a magnesium source, and an aluminum source, the method further includes: carbon-coating the heated product.

In some embodiments, the carbon-coating includes gas-phase carbon-coating and/or solid-phase carbon-coating.

In a third aspect, the present disclosure provides a battery, including the anode material or an anode material prepared by the preparation method.

The technical solution of the present disclosure has at least the following beneficial effects:

Firstly, the anode material provided by the present disclosure, by introducing Mg, Al, and P elements into the anode material for coordinating them with element O in the silicon-based active material or the lithium silicate, facilitates formation of a lithium ion transport channel, improving rate of the anode material. By controlling the range of (a+b)/c, the Mg, Al, and P elements, the silicon-based active material, and the lithium silicate are cooperated to form faster and more lithium ion transport channels, reducing lithium ion transport energy barrier, and improving rate performance and cycle performance of the anode material. In addition, by introducing the Mg, Al, and P elements, hydrolysis of the lithium silicate is reduced, thus pH value of the anode material is reduced, so as to reduce damage of an alkaline environment on a binder in the plate, and improve processing stability of a pre-lithiated anode material. A slurry prepared from the anode material is more stable, and less prone to settlement and gas generation.

Secondly, in the preparation method of an anode material provided by the present disclosure, by impregnating a silicon-based raw material into a phosphoric acid solution, the silicon-based raw material is uniformly adhered with phosphate ions on surface thereof, which then is mixed with a lithium source, a magnesium source, and an aluminum source and heated. During the heating, a content ratio of the Mg, Al, and P elements is controlled, so as to control the range of $(a+b)/c$. The lithium source and the silicon-based active material form lithium silicate, and lithium in a part of the lithium silicate is substituted by magnesium and aluminum, and silicon is substituted by phosphorus. The Mg element and Al element have larger radius than Li, and phosphorus provides more bonding points than silicon, thus the Mg, Al, and P elements, the silicon-based active material, and the lithium silicate are cooperated to form faster and more lithium ion transport channels, reducing lithium ion transport energy barrier.

The preparation method of the anode material provided by the present disclosure not only improves electrochemical performance of the material and is suitable for large-scale production, but also the prepared anode material effectively improves rate performance and cycle stability of the battery.

## BRIEF DESCRIPTION OF DRAWINGS

FIG. 1 is a flowchart of the preparation method of an anode material provided by an embodiment of the present disclosure;

FIG. 2 is a comparison diagram of cycle performances of anode materials prepared by Example 1 and Comparative Example 1 of the present disclosure;

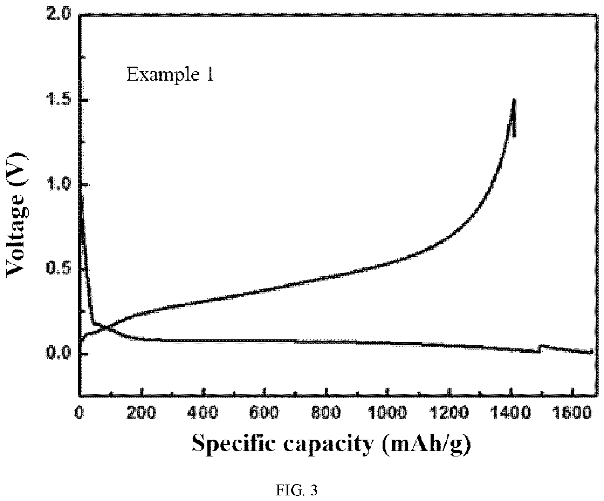

FIG. 3 is a schematic diagram of a cycle capacity retention state of the anode material prepared by Example 1 of the present disclosure.

## DESCRIPTION OF EMBODIMENTS

Preferred embodiments of the present disclosure are described as follows, it should be noted that modifications and adaptations may be made to those skilled in the art without departing from the principles of the present disclosure, which are also deemed to fall within the scope of the present disclosure.

With continuous expansion and deepening of the application of lithium ion battery, there are more and more requirements for performance of the lithium ion battery, especially in the aspect of energy density of battery. Traditional graphite anode material is not enough to meet increasing market demands. As an anode material with a high specific capacity, silicon oxide material has attracted much attention in recently. A specific capacity of the silicon oxide material exceeds 2000 mAh/g. However, compared with graphite material, the silicon oxide material has low initial Coulombic efficiency, poor conductivity, and poor cycle and rate performance.

In order to improve the performances of the silicon-oxygen material, lithium doping is often adopted for improving initial Coulombic efficiency of the silicon-oxygen material. But, after lithium doping, silicon distribution in original silicon-oxygen material is changed, which causes silicon aggregation, resulting in degraded cycle performance and rate performance and expanded volume of the material. In addition, the lithium doped silicon oxide material contains lithium silicate therein. The lithium silicate bring a high alkalinity due to hydrolysis, which damage polymer binder as preparing an aqueous slurry, resulting in settlement of the slurry, which tends to affect manufacturing of battery.

In some embodiments, the present disclosure provides an anode material including an active material, and the active material includes a silicon-based active material and a lithium silicate.

The anode material further includes Mg element, Al element, and P element, where the Mg element accounts a mass content of a% in the anode material, the Al element accounts a mass content of b% in the anode material, the P element accounts a mass content of c% in the anode material, where $0.3 \leq (a+b)/c \leq 1.5$, and $0.5 \leq a+b+c \leq 10$.

The anode material provided by the present disclosure, by introducing the Mg, Al, and P elements into the anode material for coordinating supposedly them with element O in the silicon-based active material or the lithium silicate, facilitates formation of a lithium ion transport channel, improving rate of the anode material. By controlling the range of $(a+b)/c$, the Mg, Al, and P elements, the silicon-based active material, and the lithium silicate are cooperated to form faster and more lithium ion transport channels, reducing lithium ion transport energy barrier. In addition, by introducing the Mg, Al, and P elements, hydrolysis of the lithium silicate is reduced, thus pH value of the anode material is reduced, so as to reduce damage of an alkaline environment on a binder in the plate, and improve processing stability of a pre-lithiated anode material. A slurry prepared from the anode material is more stable, and less prone to settlement and gas generation. By numerous experiments, it is found that as long as the Mg element, Al element, and P element are present, and the relationships of $0.3 \leq (a+b)/c \leq 1.5$ and $0.5 \leq a+b+c \leq 10$ are met, the expected technical effects are achieved, and the technical problem of the present disclosure is solved.

In the above technical solution, a value of $(a+b)/c$ may be 0.3, 0.5, 0.7, 0.8, 0.9, 1.0, 1.2, 1.3, 1.4, or 1.5, etc., or other value within the above range, which is not limited herein. If $(a+b)/c < 0.3$, amounts of Mg and Al is too small, and redundant P bonds with the Li, which is doped in the anode material by pre-lithiumation, to form too much lithium phosphate, resulting in loss of active lithium ions, and reduced initial effect of the anode material. If $(a+b)/c > 1.5$, amount of P is too small, and redundant Mg and Al bond excessively with Si and O to form magnesium silicate, aluminum silicate, etc., resulting in loss of silicon, and reduced specific capacity of the anode material. Therefore, controlling balance of ratio of Mg, Al, and P facilitates to form an effective lithium ion transport channel, improving initial Coulombic efficiency and rate performance of the anode material. Preferably, $0.6 \leq (a+b)/c \leq 1.2$.

In the above technical solution, a value of $a+b+c$ may be 0.5, 1, 1.5, 2, 3, 4, 5, 6, 7, 8, 9, or 10, or other value within the above range, which is not limited herein. If the value of $a+b+c$ is too small, it indicates that content of the doping elemental in the anode material is too small, and magnesium aluminum phosphate related substance formed on surface and/or inside of the silicon-based active material are insufficient, resulting in a decreased pH value of the anode material, and after preparing a slurry by the anode material, stability of the slurry is reduced.

In some embodiments, contents of Al, Mg, and P elements is tested by a way of ICP (Agilent 5800 VDV ICP-OES).

In some embodiments, a substance including Al, Mg, and P elements is considered to include at least one of aluminum silicate, magnesium silicate, aluminum phosphate, magnesium phosphate, magnesium oxide, aluminum oxide, phosphorus oxide, and phosphate, but is not limited thereto. In some embodiments, the substance including Al, Mg, and P elements is considered to be at least one of $LiAlSiO_4$, $Al_2SiO_5$, $Al_2O_3$, $P_2O_5$, $Li_3PO_4$, $AlPO_4$, $Al(PO_3)_3$, $LiAlO_2$, $MgO$, $MgSiO_3$, $Mg_2SiO_4$, $Mg_3(PO4)_2$, and $Li_2Mg_2O_4Si_3$, but is not limited thereto. It should be noted that, in view of the current detection technology, the inventor did not have a good way to completely confirm specific existence forms of the Al, Mg, and P elements, but from discussion of the above principles, data of the Examples, and an analysis of beneficial effects, the inventor summarizes that controlling contents of the Al, Mg, and P elements in the present disclosure within the above ranges has solved the technical problem of the present disclosure, and involves no obvious relationship with the specific existence forms of the Al, Mg, and P elements.

In some embodiments, the Al element in composite anode material is at least partially present in a +3 valence form.

In some embodiments, the Mg element in composite anode material is at least partially present in a +2 valence form.

In some embodiments, the Mg element accounts a mass content of $a\%$ in the anode material, where $0.001 \leq a \leq 0.065$, which may specifically be 0.001%, 0.004%, 0.006%, 0.008%, 0.01%, 0.03%, 0.035%, 0.038%, 0.040%, 0.041%, 0.045%, 0.05%, 0.055%, 0.065%, etc., which is not limited herein.

In some embodiments, the Al element accounts a mass content of $b\%$ in the anode material, where $0.09 \leq b \leq 0.55$, which may specifically be 0.09%, 0.095%, 0.1%, 0.12%, 0.15%, 0.2%, 0.25%, 0.35%, 0.39%, 0.40%, 0.42%, 0.50%, 0.55%, etc., which is not limited herein.

In some embodiments, the P element accounts a mass content of $c\%$ in the anode material, where $0.15 \leq c \leq 0.70$, which may specifically be 0.15%, 0.18%, 0.22%, 0.25%, 0.3%, 0.35%, 0.4%, 0.45%, 0.5%, 0.55%, 0.6%, or 0.65%, etc., which is not limited herein.

In some embodiments, the silicon-based active material includes a silicon grain with a grain size of $\leq 20$ nm, which may specifically be 20 nm, 19 nm, 18 nm, 15 nm, 12 nm, 10 nm, 8 nm, 5 nm, 2 nm, etc., which is not limited herein.

In some embodiments, the silicon-based active material includes silicon and/or silicon oxide.

In some embodiments, the silicon-based active material includes silicon oxide. The silicon oxide is represented by a general formula $SiO_x$ ($0 \leq x \leq 2$). In some explanations, it may be a material formed by dispersing silicon particles in $SiO_2$, or may be a material having a tetrahedral structural unit, in which silicon atom is located at center of the tetrahedral structural unit, and oxygen atom is located at four vertices of the tetrahedral structural unit. The silicon oxide may specifically be $SiO_{0.2}$, $SiO_{0.4}$, $SiO_{0.6}$, $SiO_{0.8}$, SiO, or $SiO_{1.2}$, etc. Preferably, the silicon oxide is SiO.

In some embodiments, the lithium silicate includes at least one of $Li_2SiO_3$, $Li_2Si_2O_5$, and $Li_4SiO_4$. It is understood that a pre-lithiated silicon-based active material may produce a certain amount of lithium silicate, which is mostly present on surface and/or inside of the silicon-based active material, or the silicon-based active material is dispersed in the lithium silicate.

In some embodiments, the Mg element accounts a mass content of $a\%$ in the anode material, the Al element accounts a mass content of $b\%$ in the anode material, and $0.002 \leq a/b \leq 2$, which may specifically be 0.002, 0.005, 0.008, 0.01, 0.02, 0.03, 0.05, 0.1, 0.2, 0.3, 0.5, 0.8, 1, 1.5, or 2, etc., or other value within the above range, which is not limited herein. It is understood that Mg and Al have larger atomic radiuses than that of Li, which may occupy lattice site of Li, facilitating to form a larger ion channel. Further, Mg has a better doping reaction activity, promoting more uniform and effective doping of a metal element. Controlling the $a/b$ ratio within the above range realizes balanced doping of $Mg^{2+}$ and

**EP 4 604 206 A1**

the $Al^{3+}$ without excessively occupying lattice site of Li by an element. The formed magnesium aluminum phosphate and lithium silicate also more uniformly disperse and distribute on surface and/or inside of the silicon-based active material. In addition, by adding Mg and Al simultaneously, grains of the lithium silicate crystal are more uniform, so that the lithium ion transport performance is better.

In some embodiments, the anode material further includes a carbon layer. It is understood that the carbon layer is coated on at least part of surface of a core containing the silicon-based active material and the lithium silicate.

In some embodiments, the carbon layer has a thickness of 10 nm to 2000 nm, which may specifically be 10 nm, 50 nm, 100 nm, 300 nm, 500 nm, 800 nm, 1000 nm, 1500 nm, 1800 nm, or 2000 nm, which is not limited herein. Controlling the thickness of the carbon layer facilitates improving lithium ion transport efficiency, facilitates large-rate charging and discharging of the material, improves volume expansion of the material, and improves cycle performance of the anode material.

In some embodiments, the carbon layer includes at least one of an amorphous carbon material and a graphitized carbon material.

In some embodiments, the carbon layer includes an amorphous carbon material, and where amorphous carbon material includes at least one of amorphous carbon, carbon black, and activated carbon.

In some embodiments, the carbon layer includes a graphitized carbon material, where the graphitized carbon material includes at least one of conductive graphite and graphene.

In some embodiments, the anode material has a tap density of 0.5 $g/cm^3$ to 1.5 $g/cm^3$, such as 0.2 $g/cm^3$, 0.3 $g/cm^3$, 0.5 $g/cm^3$, 0.6 $g/cm^3$, 0.7 $g/cm^3$, 0.8 $g/cm^3$, 1.0 $g/cm^3$, 1.2 $g/cm^3$, etc., preferably 0.7 $g/cm^3$ to 1.3 $g/cm^3$.

In some embodiments, the anode material has a particle size distribution satisfying: D10$\geq$1.0 $\mu$m, 3 $\mu$m $\leq$D50 $\leq$10 $\mu$m, and D90 $\leq$25.0 $\mu$m.

Specifically, the anode material may have an average particle size $D_{50}$ of 3 $\mu$m, 4 $\mu$m, 5 $\mu$m, 6 $\mu$m, 7 $\mu$m, 8 $\mu$m, 9 $\mu$m, or 10 $\mu$m, etc.; the anode material may have an particle size $D_{10}$ of 1.0 $\mu$m, 1.5 $\mu$m, 2.0 $\mu$m, 2.5 $\mu$m, 2.9 $\mu$m or 3 $\mu$m, etc.; and the anode material may have an particle size $D_{90}$ of 25 $\mu$m, 20 $\mu$m, 18 $\mu$m, 15 $\mu$m, 12 $\mu$m, or 10 $\mu$m, etc., which are not limited herein. Controlling the particle size of the anode material within the above range facilitates to improve cycle performance and rate performance of the anode material.

In some embodiments, the anode material has a specific surface area of 0.1 $m^2$/g to 50 $m^2$/g. Optionally, the composite anode material has a specific surface area of 1 $m^2$/g, 5 $m^2$/g, 8 $m^2$/g, 10 $m^2$/g, 15 $m^2$/g, 20 $m^2$/g, 25 $m^2$/g, 30 $m^2$/g, 35 $m^2$/g, 40 $m^2$/g, 45 $m^2$/g, or 50 $m^2$/g, etc., which is not limited herein. It is understood that controlling specific surface area within the above range facilitates to reduce consumption of irreversible active lithium ions, and improve initial Coulombic efficiency of the battery.

In some embodiments, carbon element accounts a mass content of 1% to 50% in the anode material, which may specifically be 1%, 5%, 8%, 10%, 15%, 20%, 30%, 35%, 40%, 45%, 50%, etc., which is not limited herein. It should be noted that the carbon element in the anode material is derived from the carbon material in the carbon layer.

In some embodiments, the lithium silicate accounts a mass content of 30% to 80% in the anode material, which may specifically be 30%, 35%, 40%, 45%, 50%, 55%, 60%, 65%, 70%, or 80%, etc., which is not limited herein. Pre-lithiating the silicon-based active material effectively improves initial Coulombic efficiency of the anode material.

In some embodiments, the lithium silicate is uniformly distributed on surface and/or inside of the silicon-based active material, and at least part of the lithium silicate is present in the carbon layer.

In some embodiments, the anode material is tested for specific capacity at a voltage of 0 to 1.5V, during delithiation of the anode material, the specific capacity of the anode material is A at a cut-off voltage of 0.3V, the specific capacity of the anode material is B at a cut-off voltage of 0.4V, and the specific capacity of the anode material is C at a cut-off voltage of 0.5V, which satisfy the following relational expression: 0.7$\leq$(C-B)/(B-A)$\leq$1.3. (C-B)/(B-A) may specifically be 0.7, 0.8, 0.9, 1.0, 1.1, 1.2, or 1.3, etc., or other value within the above range. If (C-B)/(B-A) is lower than 0.7, the anode material may have a certain loss in capacity, and a reduced initial effect. If (C-B)/(B-A) is greater than 1.3, there are more grains aggregated in the anode material, causing affecting lithium ion transport in the anode material, and deteriorating cycle performance of the anode material at room temperature.

In some embodiments, the anode material has a pH value of 9 to 12, which may be 9, 9.5, 10, 10.5, 11, 11.5, or 12, etc., or other value within the above range. A slurry prepared from the anode material provided by the present disclosure is more stable, and less prone to settlement and gas generation.

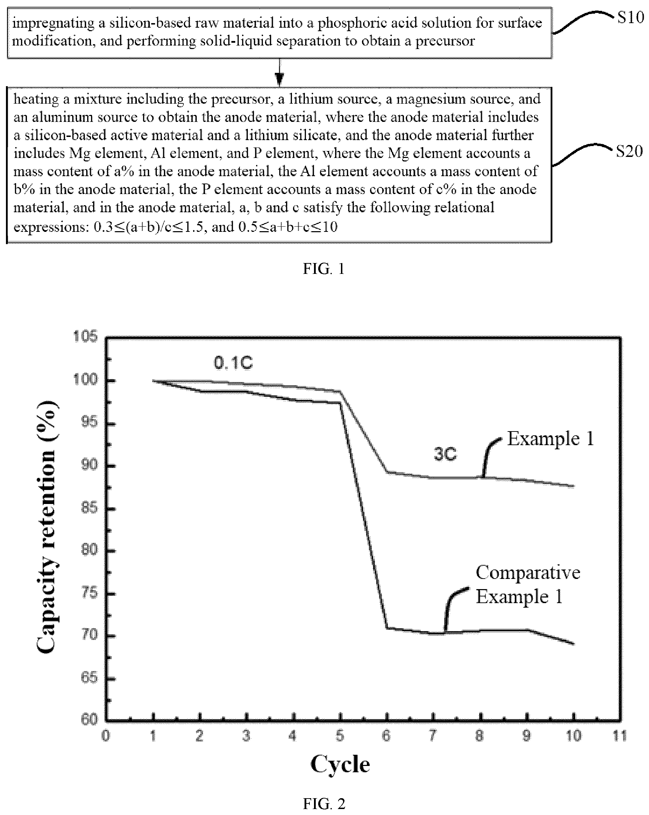

The present disclosure further provides a preparation method of a composite anode material, as shown in FIG. 1, the method includes the following steps S10 to S20:

S10, impregnating a silicon-based raw material into a phosphoric acid solution for surface modification, and performing solid-liquid separation to obtain a precursor; and

S20, heating a mixture including the precursor, a lithium source, a magnesium source, and an aluminum source to obtain the anode material, where the anode material includes a silicon-based active material and a lithium silicate, and the anode material further includes Mg element, Al element, and P element, where the Mg element accounts a mass content of a% in the anode material, the Al element accounts a mass content of b% in the anode material, the P element accounts a mass content of c% in the anode material, and in the anode material, a, b and c satisfy the following relational expressions: $0.3 \leq (a+b)/c \leq 1.5$, and $0.5 \leq a+b+c \leq 10$.

In the preparation method of an anode material provided by the present disclosure, by impregnating a silicon-based raw material into a phosphoric acid solution, the silicon-based raw material is uniformly adhered with phosphate ions on surface thereof, which then is mixed with a lithium source, a magnesium source, and an aluminum source and heated. During the heating, the lithium source and the silicon-based active material form lithium silicate, and lithium in a part of the lithium silicate is substituted by magnesium and aluminum, and silicon is substituted by phosphorus. The Mg element and Al element have larger radius than Li, and phosphorus provides more bonding points than silicon, thus the Mg, Al, and P elements, the silicon-based active material, and the lithium silicate are cooperated to form faster and more lithium ion transport channels, reducing lithium ion transport energy barrier.

This solution will be described in details as follow:
S10, impregnating a silicon-based raw material into a phosphoric acid solution for surface modification, and performing solid-liquid separation to obtain a precursor.

In some embodiments, the silicon-based raw material includes silicon oxide $SiO_y$, where $0<y\leq2$. The silicon oxide may specifically be $SiO_{0.2}$, $SiO_{0.4}$, $SiO_{0.6}$, $SiO_{0.8}$, SiO, or $SiO_{1.2}$. Preferably, the silicon oxide is SiO.

In some embodiments, the phosphoric acid solution has a concentration of 0.05 mol/L to 5 mol/L, which may specifically be 0.05 mol/L, 0.1 mol/L, 0.5 mol/L, 0.8 mol/L, 1 mol/L, 2 mol/L, 3 mol/L, 4 mol/L, or 5mol/L, etc., which is not limited herein.

In some embodiments, athe impregnating has a duration of 2 h to 10 h, which may specifically be 2h, 3 h, 5 h, 6 h, 7 h, 8 h, 9 h, or 10 h, which is not limited herein.

In some embodiments, the solid-liquid separation manner includes at least one of filtration and centrifugation. The filtration is vacuum filtration, filter paper filtration, etc.

S20, heating a mixture including the precursor, a lithium source, a magnesium source, and an aluminum source to obtain the anode material, where the anode material includes a silicon-based active material and a lithium silicate, and the anode material further includes Mg element, Al element, and P element, where the Mg element accounts a mass content of a% in the anode material, the Al element accounts a mass content of b% in the anode material, the P element accounts a mass content of c% in the anode material, and in the anode material, a, b and c satisfy the following relational expressions: $0.3 \leq (a+b)/c \leq 1.5$, and $0.5 \leq a+b+c \leq 10$.

In some embodiments, a silicon grain in the silicon-based active material has a grain size of $\leq 20$nm, which may specifically be 20 nm, 19 nm, 18 nm, 15 nm, 12 nm, 10 nm, 8 nm, 5 nm, or 2 nm, etc., which is not limited herein.

In some embodiments, the silicon-based active material includes nano-silicon and/or silicon oxide.

In some embodiments, the silicon-based active material includes silicon oxide $SiO_x$, where $0<x\leq2$. The silicon oxide may specifically be $SiO_{0.2}$, $SiO_{0.4}$, $SiO_{0.6}$, $SiO_{0.8}$, SiO, or $SiO_{1.2}$, etc. Preferably, the silicon oxide is SiO.

In some embodiments, the lithium source includes at least one of $Li_2O$, $Li_2CO_3$, LiOH, Li, LiH, $LiAlH_4$, and $LiBH_4$.

In some embodiments, the magnesium source includes at least one of $Mg_2O$, Mg, $Mg(OH)_2$, and $MgCl_2$.

In some embodiments, the aluminum source includes at least one of $Al_2O_3$, Al, $Al(OH)_3$, and $AlCl_3$.

In some embodiments, the heating has a temperature of 400°C to 900°C, and a duration of 2 h to 10 h. Specifically, the heating has a temperature of 400°C, 500°C, 600°C, 650°C, 700°C, 750°C, 800°C, or 900°C, and a duration of 2 h, 4 h, 6 h, 8 h, 9 h, or 10 h, which are not limited herein.

In some embodiments, the heating is performed in a protective atmosphere;
In some embodiments, a gas of the protective atmosphere includes at least one of nitrogen, helium, neon, argon, and krypton.

In some embodiments, the lithium silicate includes at least one of $Li_2SiO_3$, $Li_2Si_2O_5$, and $Li_4SiO_4$. It is understood that a pre-lithiated silicon-based active material may produce a certain amount of lithium silicate, which is mostly present on surface and/or inside of the silicon-based active material, or the silicon-based active material is dispersed in the lithium silicate.

In some embodiments, the Mg element accounts a mass content of a% in the anode material, the Al element accounts a mass content of b% in the anode material, and $0.002 \leq a/b \leq 2$, which may specifically be 0.002, 0.005, 0.008, 0.01, 0.02, 0.03, 0.05, 0.1, 0.2, 0.3, 0.5, 0.8, 1, 1.5, or 2, etc., or other value within the above range, which is not limited herein. It is understood that Mg and Al have larger atomic radiuses than that of Li, which may occupy lattice site of Li, facilitating to form a larger ion channel. Further, Mg has a better doping reaction activity, promoting more uniform and effective doping of a metal element. Controlling the a/b ratio within the above range realizes balanced doping of $Mg^{2+}$ and the $Al^{3+}$ without excessively occupying lattice site of Li by an element. The formed magnesium aluminum phosphate and lithium silicate also more uniformly disperse and distribute on surface and/or inside of the silicon-based active material. In addition, by adding Mg and Al simultaneously, grains of the lithium silicate crystal are more uniform, so that the lithium ion transport performance is better.

In some embodiments, before S10, the method further includes: carbon-coating a silicon-based active material to obtain a silicon-carbon composite as the silicon-based active material.

In some embodiments, after S20, the method further includes: carbon-coating the heated product.

In some embodiments, the carbon-coating includes gas-phase carbon-coating and/or solid-phase carbon-coating.

When the carbon-coating is gas-phase carbon-coating, the method specifically includes: vapor-depositing the silicon-based active material by using a carbon source gas under a protective atmosphere, to obtain a composite.

In some embodiments, the vapor-depositing has a temperature of 600°C to 1000°C, which may specifically be 600°C, 700°C, 800°C, 850°C, 900°C, 950°C, or 1000°C, etc., which is not limited herein. Preferably, the vapor-depositing has a temperature of 700°C to 900°C.

In some embodiments, the vapor-depositing has a temperature keeping time of 0.5 h to 10 h, which may specifically be 0.5 h, 1 h, 3 h, 6 h, 8 h, 9 h, or 10 h, etc., which is not limited herein. Preferably, the vapor-depositing has a temperature keeping time of 3 h to 9 h.

In some embodiments, the carbon source gas includes at least one of an alkane, a cycloalkane, an alkene, an alkyne, and an aromatic hydrocarbon. Specifically, the carbon source gas includes at least one of acetylene, methane, benzene, toluene, cyclohexane, ethanol, ethylene, and propylene.

In some embodiments, the carbon source gas has a concentration of 0.1 L/min to 10 L/min, which may specifically be 0.1 L/min, 0.4 L/min, 0.6 L/min, 0.8 L/min, 1.0 L/min, 2 L/min, 5 L/min, 6 L/min, 8 L/min, 9 L/min, or 10 L/min, etc., which is not limited herein. by introducing a carbon source gas with a certain concentration as a gas source of the carbon material, and keeping temperature for a certain time, the carbon material is deposited on surface of the silicon-based active material.

When the carbon-coating is solid-phase carbon-coating, the method specifically includes: mixing the silicon-based raw material with a second carbon source and carbonizing, to obtain a silicon-carbon composite.

In some embodiments, the second carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, a mass ratio of the silicon-based raw material and the second carbon source is (20 to 100): (10 to 80). A mass ratio of the silicon-based active material and the second carbon source may be 20:10, 30:15, 50:60, 80:30, 90:20, 100:10, etc., or other value within the above range, which is not limited herein.

In some embodiments, the carbonizing has a temperature of 600°C to 1000°C, which may specifically be 600°C, 700°C, 800°C, 810°C, 820°C, 830°C, 840°C, 850°C, 860°C, 870°C, 880°C, 890°C, 900°C, 950°C, or 1000°C, which is not limited herein. Preferably, the carbonizing has a temperature of 700°C to 900°C.

In some embodiments, the carbonizing has a temperature keeping time of 0.5 h to 10 h, which may specifically be 0.5 h, 1 h, 2 h, 3 h, 4 h, 5 h, 6 h, 7 h, 8h, 9 h, or 10 h, etc., which is not limited herein. Preferably, the carbonizing has a temperature keeping time of 3 h to 5 h.

In some embodiments, the carbonizing is performed in a protective atmosphere, where a gas of the protective atmosphere includes at least one of nitrogen, helium, neon, argon, and krypton.

In some embodiments, the silicon-carbon composite after the carbon-coating is further performed at least one of crushing, sieving, and demagnetizing. Preferably, the silicon-carbon composite after the carbon-coating is further performed crushing, sieving, and demagnetizing in sequence.

It should be noted that, no matter whether the carbon-coating is performed before the step S10 or after the step S20, the influence on the present disclosure is not large, because the carbon layer formed by coating does not affect contact between the silicon-based raw material and the phosphoric acid, and the phosphoric acid can penetrate through the carbon layer to uniformly adhere on surface of the silicon-based raw material. During the subsequent heating, the lithium source and the silicon-based raw material form lithium silicate, and lithium in a part of the lithium silicate is substituted by magnesium and aluminum, and silicon is substituted by phosphorus. The divalent Mg element and trivalent Al element have larger radius than Li, and phosphorus provides more bonding points than silicon. By coordinating Mg, Al with P and O, magnesium aluminum phosphate related substance and lithium silicate are formed on surface and/or inside of the silicon-based active material. The lithium silicate and the magnesium aluminum phosphate cooperate to form a faster and more lithium ion transport channel. In addition, through the carbon-coating, volume expansion of the material is further improved, lithium ion transport efficiency is improved, large-rate charging and discharging of the material is facilitated, and cycle performance of the anode material is improved.

Embodiments of the present disclosure further provide a battery, which adopt the anode material provided in the above embodiments of the present disclosure, or an anode material prepared by the preparation method of the anode material provided in the above embodiments of the present disclosure. The battery provided by embodiments of the present disclosure has advantages of high capacity, high initial effect, long cycle service life, excellent rate performance, and low expansion.

Embodiments of the present disclosure is further described below through Examples. The embodiments herein are not limited to the specific Examples described below. Variations may be made appropriately without changing the scope of the independent claims.

**Example 1**

A preparation method of an anode material included the following steps:

(1) 1 kg of SiO powder ($D_{50}$=6.3 $\mu$m) was placed in a tube fumace, heated to 900°C under nitrogen protection, introduced with acetylene, kept temperature for 3 h and cooled, to obtain a carbon-coated SiO material;
(2) 100 g of phosphoric acid and 950 g of water were uniformly mixed to obtain a phosphoric acid solution, the carbon-coated SiO material was immersed in the phosphoric acid solution for 6 h, and performer suction filtration, to obtain a precursor; and
(3) 100 g of $Li_2O$, 3 g of $MgCl_2$, and 30.3 g of $AlCl_3$ were mixed with the precursor, and then placed in a box furnace under nitrogen protection, heated to 800°C and kept temperature for 4 h, and sieved, to obtain the anode material.

The anode material prepared by this Example of the present disclosure includes an active material and a carbon layer present on at least part of surface of the active material, and the active material includes a silicon-based active material and lithium silicate.
Other parameters of the anode material are shown in Table 1.

**Example 2**

A preparation method of an anode material included the following steps:

(1) 1 kg of SiO powder ($D_{50}$=6.3 $\mu$m) was placed in a tube fumace, heated to 900°C under nitrogen protection, introduced with acetylene, kept temperature for 3 h and cooled, to obtain a carbon-coated SiO material;
(2) 100 g of phosphoric acid and 950 g of water were uniformly mixed to obtain a phosphoric acid solution, the carbon-coated SiO material was immersed in the phosphoric acid solution for 6 h, and performer suction filtration, to obtain a precursor; and
(3) 100 g of $Li_2O$, 1.5 g of $MgCl_2$, and 21.5 g of $AlCl_3$ were mixed with the precursor, and then placed in a box furnace under nitrogen protection, heated to 800°C and kept temperature for 4 h, and sieved, to obtain the anode material.

The anode material prepared by this Example of the present disclosure includes an active material and a carbon layer present on at least part of surface of the active material, and the active material includes a silicon-based active material and lithium silicate.
Other parameters of the anode material are shown in Table 1.

**Example 3**

A preparation method of an anode material included the following steps:

(1) 1 kg of SiO powder ($D_{50}$=6.3 $\mu$m) was placed in a tube furnace, heated to 900°C under nitrogen protection, introduced with acetylene, kept temperature for 3 h and cooled, to obtain a carbon-coated SiO material;
(2) 150 g of phosphoric acid and 950 g of water were uniformly mixed to obtain a phosphoric acid solution, the carbon-coated SiO material was immersed in the phosphoric acid solution for 6 h, and performer suction filtration, to obtain a precursor; and
(3) 100 g of $Li_2O$, 1.5 g of $MgCl_2$, and 10.5 g of $AlCl_3$ were mixed with the precursor, and then placed in a box furnace under nitrogen protection, heated to 800°C and kept temperature for 4 h, and sieved, to obtain the anode material.

The anode material prepared by this Example of the present disclosure includes an active material and a carbon layer present on at least part of surface of the active material, and the active material includes a silicon-based active material and lithium silicate.
Other parameters of the anode material are shown in Table 1.

**Example 4**

A preparation method of an anode material included the following steps:

(1) 1 kg of SiO powder ($D_{50}$=6.3 $\mu$m) was placed in a tube fumace, heated to 900°C under nitrogen protection, introduced with acetylene, kept temperature for 3 h and cooled, to obtain a carbon-coated SiO material;
(2) 50 g of phosphoric acid and 950 g of water were uniformly mixed to obtain a phosphoric acid solution, the carbon-coated SiO material was immersed in the phosphoric acid solution for 6 h, and performer suction filtration, to obtain a precursor; and

(3) 100 g of $Li_2O$, 1.5 g of $MgCl_2$, and 18 g of $AlCl_3$ were mixed with the precursor, and then placed in a box furnace under nitrogen protection, heated to 800°C and kept temperature for 4 h, and sieved, to obtain the anode material.

The anode material prepared by this Example of the present disclosure includes an active material and a carbon layer present on at least part of surface of the active material, and the active material includes a silicon-based active material and lithium silicate.

Other parameters of the anode material are shown in Table 1.

**Example 5**

A preparation method of an anode material included the following steps:

(1) 1 kg of SiO powder ($D_{50}$=6.3 $\mu$m) was placed in a tube furnace, heated to 900°C under nitrogen protection, introduced with acetylene, kept temperature for 3 h and cooled, to obtain a carbon-coated SiO material;

(2) 80 g of phosphoric acid and 950 g of water were uniformly mixed to obtain a phosphoric acid solution, the carbon-coated SiO material was immersed in the phosphoric acid solution for 6 h, and performer suction filtration, to obtain a precursor; and

(3) 100 g of $Li_2O$, 1 g of $MgCl_2$, and 5 g of $AlCl_3$ were mixed with the precursor, and then placed in a box furnace under nitrogen protection, heated to 800°C and kept temperature for 4 h, and sieved, to obtain the anode material.

The anode material prepared by this Example of the present disclosure includes an active material and a carbon layer present on at least part of surface of the active material, and the active material includes a silicon-based active material and lithium silicate.

Other parameters of the anode material are shown in Table 1.

**Example 6**

(1) 100 g of phosphoric acid and 950 g of water were uniformly mixed to obtain a phosphoric acid solution, 1 kg of SiO material ($D_{50}$=6.3) was immersed in the phosphoric acid solution for 6 h, and performer suction filtration, to obtain a precursor;

(2) 100 g of $Li_2O$, 3 g of $MgCl_2$, and 30.3 g of $AlCl_3$ were mixed with the precursor, and then placed in a box furnace under nitrogen protection, heated to 800°C and kept temperature for 4 h, and sieved, to obtain a mixture; and

(3) 1.5 kg of the mixture and 120 g of asphalt were placed in a VC mixer and mixed for 40 min with a rotation speed of 500 rpm, output and then placed in a high-temperature box furnace under nitrogen protection, calcinated at 800°C for 6 h, and naturally cooled to room temperature and output, to obtain an anode material material.

The anode material prepared by this Example of the present disclosure includes an active material and a carbon layer present on at least part of surface of the active material, and the active material includes a silicon-based active material and lithium silicate.

Other parameters of the anode material are shown in Table 1.

**Example 7**

This example was conducted in the same way as in Example 1, except that: in step (1), the silicon-based raw material was $SiO_{0.8}$.

**Example 8**

This example was conducted in the same way as in Example 1, except that:

(3) 100 g of $Li_2O$, 1.3 g of MgO, and 23.1 g of $Al_2O_3$ were mixed with the precursor, and then placed in a box furnace under nitrogen protection, heated to 800°C and kept temperature for 4 h, and sieved, to obtain the anode material.

**Comparative Example 1**

(1) 1 kg of SiO powder ($D_{50}$=6.3 $\mu$m) was placed in a tube fumace, heated to 900°C under nitrogen protection, introduced with acetylene, kept temperature for 3 h and cooled, to obtain a carbon-coated SiO material;
(2) 100 g of $Li_2O$ were mixed with the carbon-coated SiO material, and then placed in a box furnace under nitrogen protection, heated to 800°C and kept temperature for 4 h, and sieved, to obtain the anode material.

**Comparative Example 2**

(1) 1 kg of SiO powder ($D_{50}$=6.3 $\mu$m) was placed in a tube fumace, heated to 900°C under nitrogen protection, introduced with acetylene, kept temperature for 3 h and cooled, to obtain a carbon-coated SiO material;
(2) 62.5 g of phosphoric acid and 950 g of water were uniformly mixed to obtain a phosphoric acid solution, the carbon-coated SiO material was immersed in the phosphoric acid solution for 6 h, and performer suction filtration, to obtain a precursor; and
(3) 100 g of $Li_2O$, 1 g of $MgCl_2$, and 17 g of $AlCl_3$ were mixed with the precursor, and then placed in a box furnace under nitrogen protection, heated to 800°C and kept temperature for 4 h, and sieved, to obtain the anode material.

**Comparative Example 3**

(1) 1 kg of SiO powder ($D_{50}$=6.3 $\mu$m) was placed in a tube furnace, heated to 900°C under nitrogen protection, introduced with acetylene, kept temperature for 3 h and cooled, to obtain a carbon-coated SiO material;
(2) 150 g of phosphoric acid and 950 g of water were uniformly mixed to obtain a phosphoric acid solution, the carbon-coated SiO material was immersed in the phosphoric acid solution for 6 h, and performer suction filtration, to obtain a precursor; and
(3) 100 g of $Li_2O$, 1.3 g of $MgCl_2$, and 7.5g of $AlCl_3$ were mixed with the precursor, and then placed in a box furnace under nitrogen protection, heated to 800°C and kept temperature for 4 h, and sieved, to obtain the anode material.

**Test Method:**

**(1) Particle size of the anode material:**

The particle size was measured by Mastersizer 3000 laser diffraction technique. The particle size measurement was accomplished by measuring intensity of scattered light when a laser beam passed through dispersed particle sample. Then the data was used to analytically calculate particle size distribution forming scatter spectrum. D50: a particle size when cumulative particle size distribution percentage of a sample reaches 50%, the physical meaning of which is that the particles with a particle size larger than is account for 50%, while the particles with a particle size smaller than it account for 50%, too. D50 also called median size or median particle size. The D90 particle size, the D50 particle size, and the D10 particle size are the equivalent sizes (average particle sizes) of the largest particle as the cumulative distribution being 90%, 50%, and 10% in the distribution curve, respectively.

**(2) Test method for specific surface area of the anode material;**

At a constant low temperature, adsorption amounts of gas on a solid surface under different relative pressures were measured, then a monomolecular layer adsorption amount of a sample was obtained depending on a Brunauer-Emmett-Teller adsorption theory and the formula thereof (BET formula), so as to calculate the specific surface area of the material.

**(3) Test method for tap density:**

A certain amount of sample was weighed, and tapped for 3000 times at 300 times/min for testing tap density, by using a Quantachrome tap density tester.

**(4) XRD Test:**

**Test method for size of silicon micrograin:**

The size of silicon micrograin was calculated by measuring XRD peaks by using a PANalytical X'pert Pro X-ray diffractometer, and then fitting and analyzing the Si peak in the XRD pattern by using Xpert HighScore software.

Test method for lithium silicate:

The lithium silicate content was quantitatively analyzed using MgO as an internal standard. The lithium silicate content was calculated by measuring XRD peaks by using a PANalytical X'pert Pro X-ray diffractometer, and then eliminating background, smoothing, and searching peak by using Jade software, fitting and analyzing, and comparing with the content of MgO.

**(5) Test method for carbon content:**

The carbon content was tested by thermogravimetric analysis.

**(6) Test method for mass contents of Al, Mg, and P in the anode material:**

The contents of Al, Mg, and P in the material were tested by ICP method. Test Method: 0.500 g of the anode material was placed in a clean platinum crucible, and then calcined in a muffle furnace at 750°C for 2 h under air atmosphere to completely remove carbon element; the calcined residue was cooled and fully reacted with a mixed acid of 4 mL $HNO_3$ and 6 mL HF, and then the platinum crucible filled with the resulted solution was placed on an electric hot plate for heating at 350°C until the solvent was completely evaporated; the crucible was cooled, then added with 6 mL HCl was added, heated until the residue was completely dissolved, and diluted to the volume in a 100 mL plastic volumetric flask; and finally, contents of Al, Mg, and P of the material were all tested by using an ICP spectrometer (Agilent 5800VDV ICP-OES). It is understood that 10000 ppm corresponds to 1% mass content.

**(7) Button battery test:**

The anode material, conductive carbon black, and a binder (styrene-butadiene rubber and hydroxymethyl cellulose) in a ratio of 75:15:10 were prepared a slurry, then uniformly coated on a copper foil and dried to prepare an anode plate, and assembled into a button battery in a glove box under argon atmosphere, where the separator was a polypropylene microporous membrane, the electrolyte was 1 mol/L lithium hexafluorophosphate (with a solvent of a mixed solution of ethylene carbonate, ethyl methyl carbonate, and dimethyl carbonate), and the cathode plate was a metal lithium sheet.
The test was conducted by LAND/NEWARE 5V/10mA-type battery tester at a voltage of 1.5V and a current of 0.1C. The initial Coulombic efficiency = the initial charging specific capacity / the initial discharging specific capacity.

**(8) Cycle performance test:**

The anode materials prepared by the above Examples and Comparative Examples were each mixed with graphite in a mass ratio of 15:85 to form an anode material, and then mixed with graphite in a mass ratio of 15:85 to obtain an anode active material. Then, the anode active material, conductive carbon black, hydroxymethyl cellulose, and styrene-butadiene rubber were uniformly mixed in a mass ratio of 92:4:2:2, coated on a copper foil to prepare an anode plate, and assembled into a button battery with a metal lithium sheet as a the cathode plate, and a polyethylene as a separator.
The test was conducted by LAND/NEWARE 5V/10mA-type battery tester at a voltage of 1.5V and a current of 0.1C. The cycle retention after 50 cycles = the 50th discharging specific capacity / the initial discharging specific capacity.
The test was conducted by LAND/NEWARE 5V/10mA-type battery tester at a voltage of 1.5V and a current of 0.1C and 3C, respectively. 3C/0.1C = the discharging specific capacity at 3C / the discharging specific capacity at 0.1C.
The anode material was tested for specific capacity at a voltage of 0 to 1.5V, the specific capacity of the anode material was A at a cut-off voltage of 0.3V, the specific capacity of the anode material was B at a cut-off voltage of 0.4V, and the specific capacity of the anode material was C at a cut-off voltage of 0.5V.

**(9) Slurry stability test:**

The anode material prepared by each Examples and Comparative Examples (as an active material), conductive carbon black, and a binder (styrene-butadiene rubber and hydroxymethyl cellulose) in a ratio of 75:15:10 were prepared a slurry, then placed into an aluminum-plastic film bag for sealing and standing. Then the shape change of the aluminum-plastic film bag was monitored for 1 month.

(10) Test method for pH value

The pH value of the material was tested by using a Mettler FE20 type pH meter, which requested a calibration before use. The calibration method was as follows: the electrode was taken down a sleeve filled with protective solution, washed with pure water for several times, and soaked in distilled water for 30 minutes. Then the electrode was taken out, wiped the pH electrode to dry by using paper towel or filter paper, then placed in 4.01 buffer solution poured into a clean polyethylene beaker, and conducted calibration by pressing a calibration key; standed until the instrument test became stable (as shown in display screen), and then sequentially placed in 7.00 and 9.21 buffer solutions for calibration. After the calibration in the 3 buffer solutions was completed, it was stored or recalibrated depending on the calibration results.

Test: $5.00\pm0.01$ g of material powder was accurately weighed by a balance, placed into a 100 ml glass beaker, added with 30 ml of pure water, and uniformly stirred with a glass rod, so as to completely disperse in the pure water, then ultrasonic treated in an ultrasonic cleaner for 5 minutes, taken out and stood. The pH of the supernatant was tested by using pH meter, and recorded it value.

After the above tests, the performance parameters of the anode materials prepared by Examples 1 to 8 and Comparative Example 1 (corresponding to the sample numbers of S1 to S8 and R1) are shown in Table 1:

Table 1

| performance parameters | S1 | S2 | S3 | S4 | S5 | S6 | S7 | S8 | R1 | R2 | R3 |
|---|---|---|---|---|---|---|---|---|---|---|---|
| anode material particle size (D50, $\mu$m) | 6.5 | 6.4 | 6.4 | 6.3 | 6.1 | 6.7 | 6.5 | 6.6 | 6.5 | 6.3 | 6.2 |
| specific surface area ($m^2$/g) | 2.8 | 2.7 | 2.5 | 2.9 | 2.5 | 2.3 | 2.6 | 2.7 | 2.1 | 2.6 | 3.1 |
| tap density (g/$cm^3$) | 1.12 | 1.15 | 1.18 | 1.11 | 1.08 | 1.09 | 1.17 | 1.12 | 1.15 | 1.15 | 1.18 |
| lithium silicate content (%) | 33.6 | 33.8 | 35.2 | 35.5 | 35.7 | 34.1 | 34.3 | 35.0 | 36.0 | 35.5 | 35.2 |
| Mg content (a, ppm) | 615 | 335 | 322 | 331 | 288 | 633 | 629 | 650 | 89 | 213 | 289 |
| Al content (b, ppm) | 5097 | 3507 | 1768 | 3089 | 905 | 5210 | 5251 | 5333 | 36 | 3960 | 1639 |
| P content (c, ppm) | 4813 | 6138 | 6318 | 2311 | 3975 | 4799 | 4818 | 4803 | 11 | 2753 | 6633 |
| (a+b)/c | 1.19 | 0.63 | 0.33 | 1.48 | 0.30 | 1.22 | 1.22 | 1.25 | 11.36 | 1.52 | 0.29 |
| a/b | 0.12 | 0.10 | 0.18 | 0.11 | 0.31 | 0.12 | 0.12 | 0.12 | 2.47 | 0.05 | 0.18 |
| a+b+c (%) | 1.05 | 1 | 0.84 | 0.57 | 0.54 | 10.6 | 1.07 | 1.08 | 0.01 | 0.07 | 0.086 |
| pH value | 10.9 | 11.0 | 11.2 | 11.2 | 11.5 | 10.9 | 10.8 | 10.8 | 12.2 | 11.0 | 10.9 |

Table 2 Comparison of performance parameters of each batteries

| samples | discharging specific capacity (mAh/g) | initial Coulombic efficiency (%) | 3C/0.1C | 1A/g capacity retention after 50 cycles (%) | (C-B)/(B-A) | slurry stability |
|---|---|---|---|---|---|---|
| S1 | 1411.8 | 84.9 | 89.3 | 88.0 | 0.9 | stabilized |
| S2 | 1423.1 | 85.0 | 90.1 | 87.3 | 0.92 | stabilized |

(continued)

| samples | discharging specific capacity (mAh/g) | initial Coulombic efficiency (%) | 3C/0.1 C | 1A/g capacity retention after 50 cycles (%) | (C-B)/ (B-A) | slurry stability |
|---------|------|------|------|------|------|------|
| S3 | 1417.9 | 85.1 | 85.2 | 95.6 | 0.86 | stabilized |
| S4 | 1423.6 | 84.9 | 84.6 | 85.7 | 1.1 | stabilized |
| S5 | 1428.6 | 84.4 | 79.5 | 81.2 | 0.75 | very little gas generated after stable storage for 7 days |
| S6 | 1400.0 | 84.6 | 99.5 | 87.5 | 0.79 | stabilized |
| S7 | 1451.9 | 87.0 | 85.6 | 85.0 | 0.95 | stabilized |
| S8 | 1415.2 | 85.0 | 88.8 | 99.3 | 0.89 | stabilized |
| R1 | 1430.5 | 84.1 | 71.0 | 80.3 | 0.48 | settled and gas generated after stable storage for 1 day |
| R2 | 1410.5 | 84.3 | 78.6 | 80.6 | 0.62 | settled and gas generated after stable storage for 3 days |
| R3 | 1411.8 | 84.2 | 79.3 | 80.9 | 0.65 | settled and gas generated after stable storage for 3 days |

As shown in Table 2, the anode materials prepared by Examples 1 to 8, by introducing Mg, Al, and P elements into the anode material for coordinating them with element O in the silicon-based active material or the lithium silicate, facilitates formation of a lithium ion transport channel, improving rate of the anode material. By controlling the range of (a+b)/c, the Mg, Al, and P elements, the silicon-based active material, and the lithium silicate are cooperated to form faster and more lithium ion transport channels, reducing lithium ion transport energy barrier. In addition, by introducing the Mg, Al, and P elements, hydrolysis of the lithium silicate is reduced, thus pH value of the anode material is reduced, so as to reduce damage on a binder in the plate, and improve processing stability of a pre-lithiated anode material. A slurry prepared from the anode material is more stable, and less prone to settlement and gas generation.

In Example 5, since the value of a+b+c is relatively small, content of the doping elemental in the anode material is too small, and magnesium aluminum phosphate related substance formed on surface of the silicon-based active material is insufficient, resulting in an increased pH value of the material, i.e. larger alkalinity, and after preparing a slurry by the anode material, stability of the slurry is reduced, and a little gas is generated as the storage time prolonging.

During the preparation process of the anode material of Comparative Example 1, the carbon-coated silicon-oxygen material was directly pre-lithiated. The lithium doped silicon oxide material contains lithium silicate therein. The lithium silicate bring a high alkalinity due to hydrolysis, which damage polymer binder by alkaline aqueous solution as preparing an aqueous slurry, resulting in that the slurry tends to settle and generate gas, and the rate performance and cycle performance of the battery are also significantly reduced.

In the anode material of Comparative Example 2, (a+b)/c>1.5 and a+b+c≤0.5. Thus, the ratio of Mg, Al, and P lose balance, amount of P is too small, and redundant Mg and Al bond excessively with Si and O to form magnesium silicate, aluminum silicate, etc., resulting in loss of silicon, and reduced specific capacity of the anode material.

In the anode material of Comparative Example 3, (a+b)/c<0.3 and a+b+c≤0.5. Thus, the ratio of Mg, Al, and P lose balance, amounts of Mg and Al is too small, and redundant P bonds with the Li, which is doped in by pre-lithiumation, to form lithium phosphate, resulting in loss of active lithium ions, and reduced initial effect of the anode material.

Although the present disclosure is disclosed above in terms of preferred embodiments, but not intended to limit the claims. Any of those skilled in the art may make several possible changes and modifications without departing from the concept of the present disclosure, so the protection scope of the present disclosure should be defined by the claims of the present disclosure.

**Claims**

1. An anode material, **characterized in that** the anode material comprises a silicon-based active material and a lithium silicate;
   the anode material further comprises Mg element, Al element, and P element, wherein the Mg element accounts a mass content of a% in the anode material, the Al element accounts a mass content of b% in the anode material, the P element accounts a mass content of c% in the anode material, and in the anode material, a, b and c satisfy the following relational expressions:

$$0.3 \leq (a+b)/c \leq 1.5, \text{ and } 0.5 \leq a+b+c \leq 10.$$

2. The anode material according to claim 1, **characterized in that** the anode material comprises at least one of the following features (1) and (2):

   (1) the silicon-based active material comprises a silicon grain with a grain size of $\leq 20$ nm; and
   (2) the silicon-based active material comprises silicon and/or silicon oxide.

3. The anode material according to claim 1, **characterized in that** in the anode material, $0.002 \leq a/b \leq 2$.

4. The anode material according to claim 1, **characterized in that** the anode material comprises at least one of the following features (1) to (3):

$$(1) \ 0.001 \leq a \leq 0.065;$$

$$(2) \ 0.09 \leq b \leq 0.55;$$

   and

$$(3) \ 0.15 \leq c \leq 0.70.$$

5. The anode material according to claim 1, **characterized in that** the anode material further comprises a carbon layer.

6. The anode material according to claim 5, **characterized in that** the anode material comprises at least one of the following features (1) to (3):

   (1) the carbon layer comprises at least one of an amorphous carbon material and a graphitized carbon material;
   (2) the carbon layer comprises an amorphous carbon material, wherein the amorphous carbon material comprises at least one of amorphous carbon, carbon black, and activated carbon; and
   (3) the carbon layer comprises a graphitized carbon material, wherein the graphitized carbon material comprises at least one of conductive graphite and graphene.

7. The anode material according to claim 1, **characterized in that** the anode material has a particle size distribution satisfying: D10 $\geq 1.0$ $\mu$m, 3 $\mu$m $\leq$ D50 $\leq 10$ $\mu$m, and D90 $\leq 25.0$ $\mu$m.

8. The anode material according to claim 1, **characterized in that** the anode material comprises at least one of the following features (1) to (3):

   (1) the lithium silicate accounts a mass content of 30% to 80% in the anode material;
   (2) the lithium silicate comprises at least one of $Li_2SiO_3$, $Li_2Si_2O_5$, and $Li_4SiO_4$; and
   (3) the anode material has a pH value of 9 to 12.

9. The anode material according to claim 1, **characterized in that** the anode material is tested for specific capacity at a voltage of 0 to 1.5V, the specific capacity of the anode material is A at a cut-off voltage of 0.3V, the specific capacity of the anode material is B at a cut-off voltage of 0.4V, and the specific capacity of the anode material is C at a cut-off voltage of 0.5V, which satisfy the following relational expression: $0.7 \leq (C-B)/(B-A) \leq 1.3$.

10. A preparation method of an anode material, **characterized in that** the preparation method comprises:

impregnating a silicon-based raw material into a phosphoric acid solution for surface modification, and performing solid-liquid separation to obtain a precursor; and

heating a mixture comprising the precursor, a lithium source, a magnesium source, and an aluminum source to obtain the anode material, wherein the anode material comprises a silicon-based active material and a lithium silicate, and the anode material further comprises Mg element, Al element, and P element, wherein the Mg element accounts a mass content of a% in the anode material, the Al element accounts a mass content of b% in the anode material, the P element accounts a mass content of c% in the anode material, and in the anode material, a, b and c satisfy the following relational expressions: $0.3 \leq (a+b)/c \leq 1.5$, and $0.5 \leq a+b+c \leq 10$.

11. The preparation method according to claim 10, **characterized in that** the preparation method satisfies at least one of the following features:

(1) the phosphoric acid solution has a concentration of 0.05 mol/L to 5 mol/L;
(2) the impregnating has a duration of 2 h to 10 h; and
(3) the solid-liquid separation comprises at least one of filtration and centrifugation.

12. The preparation method according to claim 10, **characterized in that** the preparation method satisfies one of the following features:

(1) the lithium source comprises at least one of $Li_2O$, $Li_2CO_3$, LiOH, Li, LiH, $LiAlH_4$, and $LiBH_4$;
(2) the magnesium source comprises at least one of $Mg_2O$, Mg, $Mg(OH)_2$, and $MgCl_2$;
(3) the aluminum source comprises at least one of $Al_2O_3$, Al, $Al(OH)_3$, and $AlCl_3$; and
(4) the heating has a temperature of 400°C to 900°C.

13. The preparation method according to claim 10, **characterized in that** before impregnating a silicon-based raw material into a phosphoric acid solution for surface modification, the method further comprises: carbon-coating a silicon-based raw material to obtain a silicon-carbon composite as the silicon-based active material.

14. The preparation method according to claim 10, **characterized in that** after heating a mixture comprising the precursor, a lithium source, a magnesium source, and an aluminum source, the method further comprises: carbon-coating the heated product.

15. A battery, **characterized in that** the battery comprises the anode material according to any one of claims 1-9, or an anode material prepared by the preparation method according to any one of claims 10 to 14.

| impregnating a silicon-based raw material into a phosphoric acid solution for surface modification, and performing solid-liquid separation to obtain a precursor | S10 |

| heating a mixture including the precursor, a lithium source, a magnesium source, and an aluminum source to obtain the anode material, where the anode material includes a silicon-based active material and a lithium silicate, and the anode material further includes Mg element, Al element, and P element, where the Mg element accounts a mass content of a% in the anode material, the Al element accounts a mass content of b% in the anode material, the P element accounts a mass content of c% in the anode material, and in the anode material, a, b and c satisfy the following relational expressions: $0.3 \leq (a+b)/c \leq 1.5$, and $0.5 \leq a+b+c \leq 10$ | S20 |

FIG. 1

FIG. 2

FIG. 3

# INTERNATIONAL SEARCH REPORT

International application No.

**PCT/CN2024/096685**

| A. | CLASSIFICATION OF SUBJECT MATTER |
|---|---|

H01M4/36(2006.01)i; H01M10/00(2006.01)i

According to International Patent Classification (IPC) or to both national classification and IPC

| B. | FIELDS SEARCHED |
|---|---|

Minimum documentation searched (classification system followed by classification symbols)

H01M4/-; H01M10/-

Documentation searched other than minimum documentation to the extent that such documents are included in the fields searched

Electronic data base consulted during the international search (name of data base and, where practicable, search terms used)

CNKI, CNABS, CNTXT, ENTXTC: 硅酸锂, 磷, 铝, 镁, 氧化硅, 锂, 锂硅酸盐, Al, H3PO4, Li, Li2Si2O5, Li2SiO3, Li4SiO4, Mg, SiO

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 111342030 A (LANXI ZHIDE ADVANCED MATERIALS CO., LTD.) 26 June 2020 (2020-06-26) claims 1 and 4 | 1-15 |
| A | CN 112018367 A (AMPRIUS (NANJING) CO., LTD.) 01 December 2020 (2020-12-01) description, embodiment 1 | 1-15 |
| A | CN 114864883 A (LANXI ZHIDE ADVANCED MATERIALS CO., LTD.) 05 August 2022 (2022-08-05) description, embodiment 1 | 1-15 |
| A | CN 116779792 A (NOVUSILICON CORP.) 19 September 2023 (2023-09-19) description, embodiment 1 | 1-15 |
| A | WO 2023125171 A1 (BTR NEW MATERIAL GROUP CO., LTD. et al.) 06 July 2023 (2023-07-06) description, embodiment 1 | 1-15 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 August 2024** | **02 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/096685**

| Patent document cited in search report | | | Publication date (day/month/year) | Patent family member(s) | | | Publication date (day/month/year) |
|---|---|---|---|---|---|---|---|
| CN | 111342030 | A | 26 June 2020 | None | | | |
| CN | 112018367 | A | 01 December 2020 | None | | | |
| CN | 114864883 | A | 05 August 2022 | None | | | |
| CN | 116779792 | A | 19 September 2023 | None | | | |
| WO | 2023125171 | A1 | 06 July 2023 | EP | 4300631 | A1 | 03 January 2024 |
| | | | | KR | 20230152736 | A | 03 November 2023 |
| | | | | JP | 2024512113 | A | 18 March 2024 |
| | | | | US | 2024182314 | A1 | 06 June 2024 |
| | | | | TW | 202327151 | A | 01 July 2023 |

Form PCT/ISA/210 (patent family annex) (July 2022)

**REFERENCES CITED IN THE DESCRIPTION**

**Patent documents cited in the description**

- CN 202311294348